# EUROPEAN PATENT SPECIFICATION

(11) **EP 2 068 650 B1**
(45) Date of publication and mention of the grant of the patent: **08.06.2011**
(21) Application number: 07803263.8
(22) Date of filing: 05.09.2007
(51) Int. Cl.: A23L 1/221, A23L 1/228, A23L 2/56

(54) **FLAVOUR ENHANCING FRACTIONATED TOMATO EXTRACT AND COMPOSITIONS COMPRISING THE SAME**
GESCHMACKSFÖRDERNDER FRAKTIONIERTER TOMATENEXTRAKT UND ZUSAMMENSETZUNGEN, DIE DIESEN ENTHALTEN
EXTRAIT DE TOMATE FRACTIONNÉ REHAUSSEUR DE GOÛT ET COMPOSITIONS COMPRENANT CELUI-CI

(30) Priority: 04.10.2006 EP 06121724
(43) Date of publication of application: 17.06.2009
(73) Proprietor: Unilever N.V., 3013 AL Rotterdam (NL); Unilever PLC, London EC4Y 0DY (GB)
(72) Inventor: CAMBEEN, Alphonsus Henricus Leonardus, 3133 AT Vlaardingen (NL); DUBBELMAN, Sander, 3133 AT Vlaardingen (NL); MAVROUDIS, Nikolaos, 3133 AT Vlaardingen (NL)
(74) Representative: Tjon, Hon Kong Guno
(86) International application number: PCT/EP2007/059301
(87) International publication number: WO 2008/040611

(56) References cited:
- EP-A- 1 344 459
- EP-B1- 1 082 027
- WO-A-97/48287
- JP-A- 2003 135 038
- US-A- 5 064 673
- US-A1- 2003 026 884

## Description

### Field of the Invention

The present invention relates to natural flavour enhancing extracts and compositions comprising the same, for use in foods, and to methods of preparing such extracts and/or flavour enhancing compositions. More in particular, the invention relates to flavour enhancing compositions based on tomato extracts that are devoid of colour and of tomato-like flavour, to such a degree that they can be applied in foods without concomitantly causing any redness of the product and without imparting tomato-like flavour. Furthermore, the present invention relates to specific methods of producing said extracts and/or flavour enhancing compositions, wherein unwanted natural tomato flavouring substances and colorants can be effectively separated from the taste enhancing amino acids naturally present in tomato.

### Background of the Invention

Various flavour enhancers and/or flavour enhancing compositions or seasonings are known in the art and in common use with food products. Flavour enhancers enhance the existing flavour of a food product, that is they affect the impact and/or perception of aroma and/or non-volatile taste components. Flavour enhancers are believed to have this effect by increasing the sensitivity of taste buds.

Two classes of well-known flavour enhancing compounds are monosodium glutamate (MSG) and 5'-ribonucleotides. These flavour enhancing compounds are used as such, but are also, separately or in combination, part of flavour enhancing compositions and/or seasonings.

Yeast extracts, for instance, which are prepared by enzymatic degradation of yeast, contain the flavour enhancing 5'-ribonucleotides guanosine-5'-monophosphate (5'-GMP) and inosine-5'-monophosphate (5'-IMP). Disodium inosine-5'-monophosphate [IMP] and disodium guanosine-5'-monophosphate [GMP] are known as flavour enhancers.

Virtually every food contains glutamate. It is a major component of many protein-rich food products such as meat, fish, milk and some vegetables. However, only the free form of glutamic acid or glutamates has an effect on taste perception and/or impact. When bound to other amino acids in a protein, it does not stimulate taste receptors. The level of glutamates and free amino acids increases considerably after ripening or seasoning of certain foods. Especially certain cheeses (such as Parmesan cheese) derive their taste from long ripening, which increases the presence of amino acids (among which glutamate).

Foods containing MSG have a typical salty taste, because it contains 12.3 % sodium (e.g. one third of table salt). The detection threshold for MSG is 6.25 x 10⁴ mol/L. In general, the usage level of MSG in savoury foods is approximately one tenth that of salt; thus the sodium contribution of MSG is roughly one thirtieth of the total added sodium. By adding MSG appropriately, the sodium chloride addition can be reduced by 30-40 % while maintaining the same perception of saltiness. Results of taste panel studies on processed foods indicate that an MSG level of 0.2-0.8 % of food by weight optimally enhances the natural food flavour (Löliger, 2000).

During the past three decades however, there has been substantial controversy regarding the use of MSG in foods, at least in Western countries. The original source of this controversy appears to be a publication in the New England Journal of Medicine (Kwok, 1968) in which it was speculated that MSG (as one alternative among several other ingredients) could be the cause of adverse reactions following consumption of Chinese restaurant food. This article and subsequent publicity about MSG seems to have tapped into more general consumer concerns regarding food additives, resulting in an increasingly widespread belief among consumers that MSG may cause allergic reactions, induce or exacerbate asthma and is held responsible for the so-called "Chinese restaurant syndrome" with symptoms of numbness, weakness, headaches and palpitations (Prescott and Young, 2002). However, no evidence in studies is found implicating MSG as a cause of these or other adverse reactions (Geha *et al.,* 2000). Moreover, after intensive studies, the JECFA (Joint Expert Committee on Food Additives of the United Nations) placed it in the safest category of food additives. Later on both the SCF (Scientific Committee for Food) and the FASEB (Federation of American Societies for Experimental Biology) independently came to the same conclusions.

Nevertheless, and despite the fact MSG is often required to be included among the list of food ingredients, many food manufacturers have increasingly adopted a strategy of placing additional prominent messages regarding MSG on food labels. As a result, food labels advertising "No added MSG" have become commonplace. One possible consequence of such labels is that they generate and reinforce beliefs that MSG is harmful and/or an unsafe ingredient. Recent research on the effects of different types of label information suggests the possibility that these messages may also influence the acceptability of products containing added MSG. Prescott and Young (2002) examined the impact of information specifying the addition of MSG to foods or not on ratings of the hedonic and sensory properties of soups. In addition they measured the beliefs and attitudes towards MSG in foods with a view to provide a context within which any effects could be interpreted. The attitudes towards MSG were evaluated and found to be generally negative.

Hence, whereas MSG or glutamate can actually aid to providing healthier food products, e.g. by reducing the use of salt without loss of taste and/or palatability, consumer acceptance is generally low, even despite the proved safety of MSG. There is thus a need for MSG based flavour enhancing compositions that constitute natural food ingredients and that can be mentioned on food product labels as such or do not have to be mentioned on the labels at all.

One such composition has been described in EP 1 082 027, which relates to a taste enhancer comprising clear tomato concentrate. The fact that tomatoes are high in glutamic acid has been generally known for a long time. For this reason, tomato derived products like tomato paste and tomato juice have been used in savoury dishes worldwide. The clear tomato concentrate of EP 1 082 027 is produced by processing tomatoes so as to obtain two fractions, the serum and the pulp, whereafter the serum is further concentrated to a value of e.g. 80 Brix and then hydrolyzed or vice versa. Both acid and enzymatic hydrolysis are suggested in EP 1 082 027. The obtained clear tomato concentrate may subsequently be dried on a variety of materials. Production of tomato serum as such has been described in a variety of prior art documents, such as WO 03/101223 and WO 95/16363. 027

The clear tomato concentrate obtainable by the method disclosed in EP 1 082 027 has several draw-backs. First of all, in spite of the fact that the tomato concentrate is described as clear, i.e. transparent or having low opacity, it is in fact red to dark red. It is noted that the serum in accordance with EP 1 082 027 has a lycopene level of about 5 ppm at a Brix value of 5, as described by WO 95/16363 to which EP 1 082 027 refers, such that after concentration to a Brix value of 60 or higher, the lycopene level must be 60 ppm or higher, thus giving a far more intense red colour than do fresh tomatoes, having a lycopene level of approximately 25, according to USDA. This problem becomes particularly evident when applying said concentrate at levels exceeding approximately 0.5 %, thus greatly reducing the applicability thereof in a whole range of products wherein redness is undesirable, e.g. in white soups such as cream soups, bouillons, such a chicken bouillons and beverages.

Secondly, it was found that following the teachings of EP 1 082 027, concentrates are obtained that still possess tomato taste/flavour as well as tomato smell and that they contain high amounts of citric acid, giving a specific sour taste. Thus, these products are in fact unsuitable for application in substantial amounts, i.e. in amounts exceeding approximately 0.5 wt%, in non-tomato based products, because they will impart tomato smell and tomato taste/flavour in said products and especially a highly undesirable sour taste. High concentrations of citric acid have furthermore been found to reduce the MSG umami taste and to impart specific tickling feelings on the tongue.

It is a first object of the present invention to provide a flavour enhancing composition comprising a fractionated tomato extract having improved effectiveness, especially an improved umami taste imparting effect, as compared to the prior art taste enhancing tomato concentrates.

It is an equally important object of the present invention to provide a flavour enhancing composition comprising a fractionated extract of tomato that does not suffer from the above-mentioned draw-backs, i.e. that does not have a red or reddish colour and that is essentially free of tomato taste and tomato smell and that is less acidic, such that it can be applied in a wide variety of foodstuffs and beverages in any amount, i.e. including amounts exceeding 0.5 wt%.

### Summary of the Invention

The present inventors have surprisingly found that by treating the prior art tomato extract by subjecting it to a fractionation process using certain types of nano-filters, these objectives can be realised. The product thus obtained was found to posses improved taste enhancing and/or augmenting (umami) effects and was found to be nearly colourless and essentially devoid of tomato flavour. Thus, this product can be applied in foods in substantial quantities without concomitantly causing any redness of the product and without imparting tomato-like flavour.

The present inventors , thus found that improved umami taste imparting fractionated tomato extracts of the invention have some very special characteristics with regard to the levels and/or ratios of sugars, amino acids and/or organic acids.

More in particular, it was found by the present inventors, that in order to optimize the umami taste imparting effect of a fractionated tomato extract the ratio of glutamic acid to citric acid has to exceed 0.8.

In addition it was found that the pH of the fractionated tomato extract typically is higher than 4.6.

It was additionally found, that particularly suitable results can be obtained by providing fractionated tomato extracts wherein the amount of sugars relative to glutamic acid levels is reduced, and/or wherein certain increased amounts of gamma-aminobutyric acid (GABA) are present, and/or wherein specific increased levels of potassium are retained in the fractionated tomato extract.

The present invention thus provides fractionated tomato extracts as well as flavour enhancing compositions based thereon; the use of said compositions for enhancing the flavour of foodstuffs and beverages; foodstuffs and beverages containing flavour enhancing amounts of said compositions; and methods of preparing the improved flavour enhancing compositions and fractionated tomato extracts.

### Detailed Description of the Invention

Accordingly, a first aspect the present invention relates to a fractionated tomato extract having a pH of at least 4.6, when having a Brix value of 1.0; comprising 2.5-95 wt% of glutamic acid, based on the dry weight thereof; having a weight ratio of total glutamic acid to citric acid of at least 0.8 and a lycopene level of below 50 ppm, based on the dry weight of the extract.

A second aspect of the invention relates to a flavour enhancing composition comprising 1-100 wt% of the fractionated tomato extract of the present invention.

As used herein the term "flavour enhancing composition" is meant to refer to a composition that is capable of enhancing and/or augmenting the impact of flavour imparting substances when combined, in particular of flavour imparting substances comprised in foodstuffs and beverages wherein the flavour enhancing and/or augmenting composition is incorporated in accordance with the invention. This characteristic is also referred to in the art as umami taste. The terms "flavour enhancing and/or augmenting effects" and "umami effects" are deemed synonymous herein. Flavour enhancing and/or flavour augmenting properties of a composition are most suitably tested by tasting compositions/products comprising one or more flavour imparting compositions in combination with the flavour enhancing composition and comparing it with the same composition/product without the flavour enhancing composition, most preferably by a panel of professional flavourists, as will be illustrated in the appending examples.

The term "flavour" as used herein, typically includes both taste and aroma characteristics of a substance or composition. The overall flavour of a product is usually the combined result of taste perceived through the taste receptors in the oral cavity, especially on the tongue, and of aroma perceived through the olfactory epithelium in the nasal cavity.

It will be appreciated by the skilled person that glutamic acid and glutamate refer to the protonated acid and the deprotonated solubilised form of the same acid respectively. In addition glutamate is commonly used to refer to salts of the free acid. For the sake of convenience the term glutamic acid is used herein to refer to both the free protonated acid and the deprotonated form either in solution or as a salt, unless indicated otherwise. Tomatoes contain little glutamate in the form of the sodium or potassium salts relative to the total amount of glutamic acid. Thus, to calculate the amount of glutamic acid in the tomato extract, all glutamate therein is assumed be in the form of glutamic acid.

The term "comprising" whenever used in this document is intended to indicate the presence of stated features, integers, steps, components, but not to preclude the presence or addition of one or more other features, integers, steps, components or groups thereof.

As used herein the term "fractionated tomato extract" refers to compositions comprising a fraction of the soluble constituents naturally formed in tomato fruits. These compositions can typically be obtained by grinding, comminuting or macerating whole tomatoes, such that a pumpable mass is obtained, and separating said mass into a serum and a pulp, e.g. by centrifuging, pressing and/or filtering, and subsequently fractionating the obtained serum. As will be explained hereafter, the present invention also encompasses compositions that are formed by applying several fractionation steps and subsequently combining fractions obtained in different steps. Hence the use of the term "a fraction of the soluble constituents" here above is not meant to imply that the compositions are obtained in a single fractionation step. The exact composition of the present fractionated tomato extracts, in terms of the levels and ratios of some key soluble tomato constituents present, is the subject of the present invention; these characteristics as well as preferred methods of attaining them will be described in more detail here after.

Any statements regarding the pH of the fractionated tomato extracts as used herein , refer to the pH of the fractionated tomato extract at a predefined Brix level, typically at a Brix level of 1. As will be understood by the skilled person the pH of a fractionated tomato extract will be more or less independent of the degree of concentration within certain limits, e.g. within the range of 0.5-20 Degrees Brix, due to the buffering capacity of some of the components contained therein. Furthermore, it will be appreciated that the present fractionated tomato extracts are not limited to having a predefined Brix value; they may be further or completely dehydrated or may be provided in more dilute forms without departing from the scope of the invention, provided that, when diluted or concentrated respectively to said Brix value the pH is within the recited range.

The extract of the invention may be derived from any kind of tomato species or variety without departing from the scope of the invention. However, as is known by the skilled professional a tomato variety that is commonly used for processing on an industrial scale and is therefore suitably used in accordance with the invention includes H9992.

As mentioned herein before, the flavour enhancing composition of the invention comprises the fractionated tomato extract in an amount of 1-100 wt%, based on the total weight of said composition. Preferably, said amount ranges from 10-100 wt%, more preferably from 25-100 wt%, still more preferably from 50-100 wt%, still more preferably from 75-100 wt%, still more preferably 90-100 wt%, most preferably from 95-100 wt%.

Typically, the fractionated tomato extracts of the invention contain a total level of glutamic acid within the range of 4-90 wt%, based on the dry weight of the fractionated tomato extract, more preferably 5-80 wt%, most preferably 10-60 wt%. Hence, according to another equally preferred embodiment, the present flavour enhancing composition comprises the fractionated tomato extract in an amount sufficient to attain a total level of glutamic acid in said composition within the range of 0.1-95 wt.%, preferably in an amount sufficient to attain a total level of glutamic acid and glutamate within the range of 1-90 wt.%, most preferably within the range of 5-80 wt%.

The fractionated tomato extract obtained after nanofiltration is a more or less colorless solution. For the purpose of the present invention, the dry weight of the fractionated tomato extract is calculated using the Brix level of the extract. That is, 100 ml of fractionated tomato extract of 1 Degrees Brix corresponds to 1 g dry weight of fractionated tomato extract.

From the foregoing, it will be understood by the skilled person, that the fractionated tomato extract can be used as such for augmenting and/or enhancing the flavour of a product or composition, especially enhancing and/or augmenting the flavour impact of flavour imparting substances contained in such products or compositions. Hence, according to a particularly preferred embodiment of the invention, the flavour enhancing or augmenting composition is the fractionated tomato extract as defined herein as such.

Preferably the pH of the fractionated tomato extract is at least 4.6, more preferably at least 4.8. Without wishing to be bound by any theory it is hypothesized that at low pH the umami taste enhancing properties of glutamic acid are reduced. Hence, according to a particularly preferred embodiment of the invention said pH is within the range of 4.8-7, more preferably within the range of 4.9 - 6.5.

In a preferred embodiment of the invention the level of sugars and, especially the weight ratio of sugars to total glutamic acid is within specific predefined ranges. Without wishing to be bound by any theory, it is hypothesized that the sugars will at certain concentrations enhance the umami taste imparted by glutamic acid, whereas at too high a concentration of sugars the sweet taste is overwhelming, thus greatly reducing the umami effect of the compositions. Hence, according to a particularly preferred embodiment of the invention a fractionated tomato extract and/or flavour enhancing composition as defined herein before is provided, wherein the weight ratio of sugars, in particular fructose and glucose, to glutamic acid is less than 20, preferably less than 16, more preferably less than 10, most preferably less than 5. Preferably said ratio is at least 0.1, still more preferably at least 0.5, most preferably at least 1.

The glutamic to citric acid ratio of the present fractionated tomato extract was found to be of particular importance for the improved flavour enhancing and/or augmenting effect of the present compositions. Without wishing to be bound by any theory it is hypothesized that at low pH the umami taste enhancing properties of glutamic acid are reduced, such that a reduction in the level of citric acid relative to the level of glutamic acid will improve the effectiveness of glutamic acid. Furthermore, it was found that the reduction in citric acid present in the extract and/or flavour enhancing compositions reduced the unfavourable tickling sensation on the tongue.. Hence, according to a particularly preferred embodiment of the invention a fractionated tomato extract and/or flavour enhancing composition as defined herein before is provided, wherein the weight ratio of total glutamic acid to citric acid is at least 1.0, more preferably at least 1.5, most preferably at least 2.0.

Tomatoes have been found to contain significant amounts of the 5'-ribonucleotide adenosine monophosphate (AMP), levels of up to 21 mg/100 g have been found in fresh tomatoes. AMP has been found to aid significantly to the umami effect of the present compositions, without wishing to be bound by theory, because it has taste enhancing effects of its own, or because it acts synergistically with glutamic acid. Therefore, in a preferred embodiment of the invention, the fractionated tomato extract and/or flavour enhancing composition comprises adenosine monophosphate (AMP). The present inventors found that particularly good results are obtained with tomato extracts and flavour enhancing composition as defined herein before, comprising AMP in an amount within the range of 0.01-5 wt%, preferably within the range of 0.05-2.5 wt%, more preferably 0.08-1 wt%, most preferably within the range of 0.1-0.5 wt%, based on the dry weight thereof.

It has also been found that fractionated tomato extracts can be obtained wherein the amount of potassium is increased, which provides the particular advantage that applying these products reduces the need of addition of sodium salts, for achieving acceptable palatability. Typically, the level of potassium in the present fractionated tomato extract is 2 times that of the tomato serum, based on dry weight levels. Hence in a preferred embodiment of the invention a fractionated tomato extract is provided wherein the level of potassium is higher than 6 wt% based on dry weight, more preferably higher than 7.5 wt%, most preferably higher than 10% wt%. Preferably said level does not exceed 40 wt%, more preferably it does not exceed 25% wt%, most preferably it does not exceed 20% wt%.

As mentioned herein before, the lycopene level of the fractionated tomato extract of the invention is of particular importance. Preferably the lycopene level of the fractionated tomato extract is below 35 ppm, based on the dry weight thereof, more preferably below 20 ppm, most preferably it is below 10 ppm, based on the dry weight thereof. The lycopene level of the flavour enhancing compositions as defined herein before is below 50 ppm, based on the total weight thereof, more preferably below 35 ppm, more preferably below 20ppm, most preferably below 10 ppm.

It has been found that the total level of β-carotene in the fractionated tomato extracts of the invention was considerably decreased compared to tomato serum. According to another preferred embodiment the level β-carotene of the fractionated tomato extract and/or flavour enhancing composition is below 10 ppm, based on the dry weight thereof, more preferably below 7 ppm, most preferably it is below 5 ppm, based on the dry weight thereof.

Typically the fractionated tomato extract and/or the flavour enhancing composition is devoid of colour, in particular redness, to such a degree that it does not impart perceptible redness when applied in flavour enhancing and/or augmenting quantities in a foodstuff or beverage, which means that it preferably has a b* value of less than 8 at a Brix level of 1, more preferably it has a b* value of less than 5 at said Brix value, more preferably a b* value of less than 2 at said Brix value and most preferably it has an b* value of less than 0.

As is known by the skilled person, L*, a*, and b* values are each spectral variables in the CIELAB colourspace (full name is CIE 1976 L*, a*, b*), expressing colour values in a rectangular coordinate system, with the L*, a*, and b* values each corresponding to one dimension of the three dimensions forming the rectangular coordinate system. The L* value characterizes the lightness/darkness aspect of the colour of the region along an axis ranging from black to white, with corresponding values ranging from 0 to 100. The a* value characterizes the colour of the region along an axis ranging from green to red, with positive values corresponding to red and negative values corresponding to green. The b* value characterizes the colour of the region along an axis ranging from blue to yellow, with positive values corresponding to yellow and negative values corresponding to blue. Together, the a* value and the b* value express the hue and chroma of the region. The zero point in the plane defined by the a* values and the b* values corresponds to a neutral grey colour having a L* value corresponding to the intersection of the plane with the L* axis. A CIELAB of 50, 75, 5, for example, is typical for red, while a CIELAB of 50, -75, 5 is typical for green. A yellow sample would perhaps have CIELAB of 70, 0, 80. Two samples that are the same color and change only in lightness would be, for example, 50, 50, 50 and 70, 50, 50. Suitable measuring devices include colorimeters and spectrophotometers as is known by the skilled person. References to colour reduction in the context of tomato extracts, are to be understood as meaning that, the visible colour, expressed in terms of L*, a*, and/or b* values, exhibited by the reduced colour tomato extract is reduced relative to the visible colour, expressed in terms of L*, a*, and/or b* values, exhibited by the starting material.

As mentioned herein before, it has been found that fractionated tomato extracts in accordance with the invention do not have typical tomato aroma, and, more in particular do not impart typical tomato aroma in the products they are incorporated in. Hence, the present fractionated tomato extracts and the flavour enhancing compositions containing them, typically comprise volatiles imparting natural fresh or cooked tomato aroma in levels less than ½ of that of tomato serum expressed in ppb, more preferably less than ¹/₅ thereof, most preferably less than ¹/₁₀ thereof, based on the total weight of the fractionated tomato extract and/or the flavour enhancing compositions. More in particular, the levels of 3-methylbutanal, 6-methyl-5-hepten-2-one and β-damascenone, which are known to be key volatiles in fresh and cooked tomato aroma, were found to be substantially reduced in the fractionated tomato extract of the invention. Hence, in a preferred embodiment of the invention a fractionated tomato extract is provided, wherein the level of 3-methylbutanal is below 27 ppb, more preferably below 13 ppb, more preferably below 5 ppb, based on the total weight, when having a Brix value of 4. In another preferred embodiment of the invention a fractionated tomato extract is provided, wherein the level of 6-methyl-5-hepten-2-one, is below 800 ppb, more preferably below 400 ppb, most preferably below 80 ppb, based on the total weight at a Brix value of 4. In another preferred embodiment of the invention, a fractionated tomato extract is provided, wherein the level of β-damascenone is below 5 ppb, more preferably below 2.5 ppb, most preferably below 0.5 ppb, based on the total weight when having a Brix value of 4.

In another preferred embodiment of the invention, the level of fructose in the concentrated tomato extract and/or the flavour enhancing and/or augmenting compositions is within specific predefined levels. Without wishing to be bound by any theory, it is hypothesized that the level of fructose is of particular importance because of its high sweetness potency. In addition fructose levels have been associated with difficulties in drying tomato extracts. Therefore, in a preferred embodiment of the invention, the level of fructose of the fractionated tomato extract as well as of the flavour enhancing composition comprising it, is below 30 wt%, based on the total dry weight thereof, more preferably below 20 wt%, most preferably below 10 wt%.

In another preferred embodiment of the invention, a fractionated tomato extract and/or flavour enhancing composition as defined herein before is provided, wherein the aspartic acid to citric acid ratio is at least 0.3, more preferably at least 0.7, most preferably at least 1.0.

It has been found that the total level of gamma-aminobutyric acid (GABA) in the fractionated tomato extracts of the invention was considerably increased compared to tomato serum. More preferably, fractionated tomato extracts and/or flavour enhancing compositions are provided, wherein the ratio of GABA to aspartic acid is higher than 0.75, preferably it is higher than 1.5, most preferably it is higher than 2.0. The present fractionated tomato extracts typically contain GABA in amounts of at least 0.2, more preferably, at least 0.3, most preferably at least 0.4 g/kg, and preferably at most 3, more preferably at most 5 g/kg, most preferably at most 10 g/kg at a Brix value of 1.0 (expressed as g GABA per kg wet weight of fractionated tomato extract of 1 Degrees Brix. Since 1 kg of wet weight fractionated tomato extract with a Brix value of 1.0 corresponds to 10 g dry weight, the corresponding amount of 0.2 g GABA per kg wet weight fractionated tomato extract is 2 wt% dry weight (0.2g/10g).

As will be clear from the foregoing, the flavour enhancing composition of the invention may comprise other ingredients, in particular ingredients that are typically used in the field of flavouring compositions, more in particular one or more flavour carrier materials, which is understood herein to encompass any food grade material which does not significantly alter the organoleptic properties of the composition. Said carrier may be liquid or solid. Suitable examples include maltodextrin, modified starch, gum Arabic, ethanol and propylene glycol. According to a preferred embodiment the flavour enhancing composition of the invention has the form of a free flowing powder and comprises a carrier material selected from the group of maltodextrin, modified starch and gum Arabic. Flavour carrier materials are typically present in an amount of between 1 and 99 wt%, based on the total weight of the flavour enhancing composition, more preferably in an amount of between 5 and 75 wt%, most preferably in an amount of between 10 and 50 wt%.

The flavour enhancing compositions may also comprise one or more additional flavour enhancing and/or augmenting substances and/or one or more flavour imparting substances.

The one or more additional flavour enhancing and or augmenting substances may suitably be incorporated in a flavour enhancing and/or augmenting amount. In a particularly preferred embodiment of the invention the additional flavour enhancing and/or augmenting substance is IMP, which is typically present in an amount of between amount within the range of 0.01-10 wt%, based on the total weight of said composition, more preferably within the range of 0.05-5 wt%, most preferably within the range of 0.1-2.5 wt%.

Typically the one or more flavour imparting substances will be incorporated in the compositions of the invention in amounts of between 0.01-10 wt%, based on the total weight of the composition, more preferably 0.05-5 wt%, most preferably 0.1-2.5 wt%. As used herein the term "flavour imparting substance" is meant to encompass any food grade substance that is capable of imparting a detectable flavour impact, typically at concentrations below 0.1 wt.%, more preferably below 0.01 wt.%. Suitable examples of flavouring substances include alcohols, aldehydes, ketones, esters, ethers, acetates, nitriles, terpene hydrocarbons, nitrogenous or sulphurous heterocyclic compounds and essential oils, and said flavouring substances can be of natural or synthetic origin. Many of these are listed in reference texts such as the book by S. Arctander, Perfume and Flavor Chemicals, 1969, Montclair, New Jersey, USA, or its more recent versions, or in other works of a similar nature, as well as in the abundant patent literature in the field of flavours. It will be clear to the skilled person that the type of flavouring substance added would entirely depend on the type of product to which the composition is added.

The present flavour enhancing compositions may furthermore comprise preservatives, antioxidants and the like.

Another aspect of the present invention relates to a product selected from the group of foodstuffs and beverages, comprising a flavour enhancing and/or augmenting amount of the present fractionated tomato extract and/or the flavour enhancing composition as defined herein before. Suitable examples of foodstuffs in accordance with the invention include soups, bouillons, sauces, dressings, spreads, ready-meals, seasonings, meat products, potato snacks and pasta-dishes.

As mentioned herein before, the present fractionated tomato extract and/or the flavour enhancing compositions are advantageously used in any type of such products without imparting a typical tomato flavour and/or colour, especially as a result of the fact that the fractionated tomato extract of the invention constituting or comprised in the flavour enhancing composition is very low in lycopene and in characteristic fresh or cooked tomato flavour volatiles and/or as a result of the specific contents of sugars, amino acids and/or organic acids as described in detail herein before.

Hence, although the present fractionated tomato extract and/or flavour enhancing compositions may be used in non-tomato based products as well as tomato based products, a particularly preferred embodiment of the invention relates to products that are non-tomato based. According to a particularly preferred embodiment of the invention, the present product is selected from the group of soups, bouillons, sauces, dressings, spreads, ready-meals and pasta-dishes.

As used herein, the term "flavour enhancing and/or augmenting amount" has the meaning of an amount that is sufficient to noticeably enhance and or augment the flavour of the products in which they are incorporated, typically by enhancing and/or augmenting the impact of flavour imparting substances present in said products, as explained herein before. In a particularly preferred embodiment of the invention however, a product as defined herein before is provided, wherein the flavour enhancing and/or augmenting amount is an amount comprising 0.01-3.0 wt%, based on the total weight of the product, of glutamic acid, more preferably 0.05.-2.0 wt%, most preferably 0.1-1.0 wt%.

Another aspect of the invention relates to a method of producing a fractionated tomato extract and/or flavour enhancing composition as defined herein before, comprising the steps of preparing tomato serum and hydrolysing the proteins contained in the tomatoes from which the serum is prepared; subsequently fractionating the serum into two or more fractions, one fraction being rich in glutamic acid and low in citric acid and lycopene. Prior to preparing the serum, tomatoes are typically collected, washed, sorted and selected in accordance with the usual practice in tomato processing. These steps are not an essential aspect of the invention and any feasible type of operation may be applied with regard to pre-treatment without departing from the scope of the invention.

Typically, preparing the serum comprises separating the tomatoes into serum and pulp comprises the step of comminuting and/or macerating tomatoes, which in accordance with the invention, is meant to encompass any type of process that can be employed to disintegrate or break the tomatoes, typically, in order to obtain a pumpable mass. Typically the comminuting or macerating is continued until the particle size in the pumpable mass is reduced to certain predetermined dimensions. In order to achieve this, any type of operation and/or apparatus known to or conceivable for the skilled person may be used in accordance with the invention. According to a preferred embodiment a chopper pump is employed, wherein the tomatoes are pressed through square holes, typically 1-2 cm in diameter. In a particularly preferred embodiment preparing the serum comprises the step of applying heat prior to, during or after the comminuting and or macerating of the tomatoes. If the amount of heat applied is such that the tomatoes reach a temperature of above 80°C, the process is generally referred to as hot breaking. Hot breaking has the advantage that enzymes, e.g. pectin-degrading enzymes, are inactivated quickly. Moreover, in accordance with the invention it was found that proteins present in the tomatoes are hydrolysed to a significant degree under the influence of heat and acids present in the tomatoes, during the hot breaking.

Subsequently, according to the present method the pumpable mass obtained is separated into serum, an aqueous liquid comprising soluble tomato solids, and pulp, a (wet) solid mass containing mainly insoluble tomato components. In accordance with a preferred embodiment of the invention seeds and skin may be removed from the pumpable mass, typically by sieving using perforated screens or the like in accordance with common tomato processing, prior to said separation. Separation of the pumpable mass into serum and pulp can be effected by any means known in the art, in particular using a decanter or a centrifugal separator. In a particularly preferred embodiment of the invention a centrifugal separator is employed, such as a Westfalia CA-365-010 at a revolution speed of 4000 rpm and/or an Alpha Laval Centrifuge. In the context of the invention the pulp obtained is considered to constitute a waste material, but it may be used in accordance with conventional tomato processing, for a variety of purposes known by the skilled person. According to a preferred embodiment of the invention, the separation comprises the additional treatment of the serum by microfiltration, so as to assure that said serum is free of any undissolved solids remaining, which may typically present problems during further fractionation steps. Performing the separation in two or even more steps may be preferred. However, as will be clear to the skilled person, separation in one single step, though less convenient, may be found just as suitable and may be applied without departing from the scope of the invention. Typically the additional microfiltration step comprises forcing the serum through a microfilter having a pore size within the range of at least 0.5, preferably at least 1, more preferably at least 2, most preferably at least 3 micron, and at most 100 micron, preferably at most 50 micron, most preferably at most 30 micron.

In accordance with the present invention the peptides and proteins present in the tomatoes are hydrolysed. Hydrolysation of the proteins and peptides may be achieved by applying heat prior to, during or after comminuting and/or macerating the tomatoes. Instead or in addition, hydrolysation may be performed, before or after the microfiltration step if applied, preferably before, by further chemical and/or enzymatic treatment. Chemical treatment typically comprises adding to the serum one or more agents selected from food grade acids, such as chloric acid, and optionally stirring and heating the serum, such as to accelerate the hydrolysis of the peptide bonds in the proteins and peptides by these agents. The amounts of said agents as well as the exact conditions differ depending on amongst others the type of agents, the amounts of proteins and peptides present and the degree of hydrolysation desired and can be determined by the skilled person on a case to case basis. Enzymatic hydrolysation of the proteins and peptides is suitably effected by combining the serum with enzyme compositions comprising one or more proteases and/or peptidases of any type that are commonly used in the food industry. Commercial preparations containing the aforementioned proteolyic enzymes are available and known to the skilled person. The rate of hydrolysis will increase with gently increasing the temperature up to a certain extent, preferably the temperature is kept within the range of 20-60°C, more preferably within the range of 25-50°C, and the enzymes may be inactivated by further increasing the temperature of the serum for a short time, e.g. up to 80°C. Almost complete hydrolysis of the peptides and protein can be attained by adding a fungal proteolytic enzyme preparation sold by Novo Nordisk under the name "flavourzyme", and allowing the serum to stand for 1 hour at 50 C. The amounts of enzyme as well as the exact conditions differ depending on amongst others the type of enzyme, the amounts of proteins and peptides present in the serum and the degree of hydrolysation desired and can be determined by the skilled person on a case to case basis. According to a particularly preferred embodiment of the invention the present method comprises enzymatic hydrolysis of the proteins and peptides present in the serum.

Separating the serum into two or more fractions, one fraction being rich in glutamic acid and low in citric acid and lycopene preferably comprises nano-filtrating the hydrolysed serum over a hydrophilic membrane. The glutamic acid rich permeate obtained during this step, which is collected in accordance with the invention, is referred to herein as the "fractionated tomato extract" and has been described herein before in some more detail, with regard to the (relative) amounts of some of its key flavour and colour components. Some of the advantageous characteristics in this regard are attained as a result of the nano-filtration step, which is quite surprising given the molecular weight characteristics of some of the natural constituents which are advantageously removed during this operation, being below the theoretical molecular weight cut-off value of the nano-filtration membrane used. Without wishing to be bound by theory, it is believed that nano-filtration in accordance with the invention also separates a major fraction of the tomato aroma volatiles from the glutamic acid rich fraction.

Nanofiltration is a relatively new pressure-driven membrane filtration process for the separation of soluble components of the nanofiltration feed, falling between reverse osmosis and ultrafiltration. The most important nanofiltration membranes are composite membranes made by interfacial polymerisation. Polyether sulfone membranes, sulfonated polyether sulfone membranes, polyester membranes, polysulfone membranes, aromatic polyamide membranes, polyvinyl alcohol membranes and polypiperazine membranes are examples of widely used nanofiltration membranes. Inorganic and ceramic membranes can also be used for nanofiltration. Nanofiltration membranes may be hydrophobic and hydrophilic and they may be ionic, i.e. they may contain cationic or anionic groups.

In a particularly preferred embodiment of the invention a method is provided as described herein before, wherein the nano-filtration is performed using a polyether sulfone membrane or a sulfonated polyether sulfone membrane or an Aromatic polyamide or Polyamide or combinations of said polymer materials. For instance the following membranes are useful in the present invention: NTR-7450 (a sulfonated polyethersulfone membrane having a cut-off size of 500 to 1000 g/mol, permeability of 9.4 1/(m²h bar), NaCl-retention of 51%, manufacturer Nitto Denko); NF200 (a polyamide membrane, having a cut-off or size of 300, permeability 1.2 1/(m2 h bar ), NaCl-retention of 60 %, manufacturer Dow/Filmtec); NP010 (permanently hydrophilic polyether sulfone and polysulfone membrane, having a cut-off of 1000, permeability 15.7 1/(m²h bar), Na₂SO₄ retention 35%, manufacturer Microdyn-Nadir GmbH); NP030 (permanently hydrophilic polyether sulfone and polysulfone membrane, having a cut-off of 400, permeability 4 l/(m²h bar), Na₂SO₄- retention 85%, manufacturer Microdyn-Nadir GmbH); XN45 (an aromatic polyamide membrane having a cut-off size of 400, permeability of 10 1/(m2h bar), NaCl retention 20% manufacturer Trisep.); HYDRACoRe 50 (a sulfonated polyether sulfone membrane having a cut-off of 1000, permeability 15 l/(m2h bar), NaCl retention 50%, manufacturer Hydranautics

According to a particularly preferred embodiment of the invention a NTR7450 nano-filtration membrane is used.

The nano-filtration may be operated in any way common in the art. Typically a force will be applied for driving the hydrolysed and concentrated serum through the nano-filtration membrane, such as by centrifugation or applying a pressure gradient over the membrane. The permeate obtained is collected in accordance with the present method and it will be clear to the skilled person how to realize this in the most convenient way, depending on the system through which the nano-filtration membrane is operated.

Alternatives to nano-filtration may include chromatographic methods, such as ion-exchange chromatography, size exclusion chromatography and reversed phase chromatography, as well as solvent extraction methods. Such operation may not provide the benefit of separating lycopene and citric acid from the glutamic acid rich fraction simultaneously. It is within the skill of a trained professional to design a suitable process that may include subsequent steps of separating lycopene and citric acid from the glutamic acid rich fraction.

In another preferred embodiment of the invention, a process as described herein before is provided, comprising the additional step of enzymatic conversion of fructose contained in the serum or in a fraction thereof into glucose, preferably using immobilised fructose converting enzymes.

In another preferred embodiment of the invention a process as described herein before is provided, comprising the step of reducing the sugar content of the serum or glutamic acid rich fraction of the invention, typically including a nano-filtration operation. As will be understood by the skilled person, this may be done in the aforementioned fractionation step or in an additional fractionation step, depending *inter alia* on the selection of the type of membrane used. Alternatively sugars may be removed from the serum or glutamic acid rich fraction by crystallisation.

In another preferred embodiment of the invention the process may comprise a fractionation step wherein an AMP rich fraction low in glutamic acid and a glutamic acid rich fraction low in AMP are obtained. In that case it is particularly preferred to subsequently recover the AMP from said AMP rich fraction and add it to the glutamic acid rich fraction in a subsequent step.

In accordance with the invention, the serum or any of the fractions may be concentrated to specific predefined Brix level. Preferably, the present process comprises concentrating the fractionated tomato extract, preferably by heating said serum, preferably under reduced pressure, such as to increase the rate of water evaporation. In addition as will be understood by the skilled person, applying reduced pressure can suitably reduce thermal damage to the product, thus improving the quality of the obtained product. Preferably the concentration is performed using a so-called forced reticulation multiple effect counter current evaporator, although entirely different systems are available and can be used without departing from the scope of the invention. The product is usually concentrated until having a Brix value within the range of 0.5-80, preferably within the range of 1-60, most preferably within the range of 2-50. Alternatively, the fractionated tomato extract may be dehydrated such that a dry powder is obtained.

The term "Brix value" which is considered to be synonymous to the term Degrees Brix (symbol °Bx) is a measurement of the mass ratio of Brix is a measure of the percent total soluble solids in a given weight of plant juice, which include the summation of sucrose, fructose, vitamins, amino acids, protein, hormones and any other soluble solids. It is often expressed as the percentage of sucrose. It is measured with a saccharimeter that measures specific gravity of a liquid or more easily with a refractometer or a brix hydrometer.

In a preferred embodiment of the invention, a method is provided as defined herein before, comprising the additional step of blending the fractionated tomato extract, with a flavour carrier material. Suitable and preferred flavour carrier materials have been described herein before, as well as the levels and amounts in which to apply the fractionated tomato extract and the flavour carrier material. In a preferred embodiment of the invention, a method is provided as described herein before, wherein the permeate is dried and is optionally combined with a solid flavour carrier material. Suitable methods for drying the fractionated tomato extract are known to the skilled person and include for example, spray-drying and freeze drying. In a preferred embodiment the fractionated tomato extract can be dried and combined with a carrier material through one operation using, e.g. spray drying equipment.

In yet another preferred embodiment of the invention, a method is provided as described herein before, wherein the permeate combined with other ingredients such as one or more flavour imparting substances and/or one or more other flavour enhancing substances. Suitable examples thereof as well as the amounts applied have been discussed herein before.

Yet another aspect of the present invention relates to a method of enhancing and/or augmenting the flavour of a product selected from foodstuffs and beverages, said method comprising admixing with said product a flavour enhancing amount of a flavouring composition as defined herein before and/or as obtainable by the method defined herein before.

As mentioned herein before, the incorporation of the present fractionated tomato extract in food and beverage products results in enhancement and/or augmentation of the impact of the flavour and/or taste imparted by other flavouring substances contained in said products.

Hence, still another aspect of the invention relates to the use the present fractionated tomato extract and/or flavour enhancing compositions as described herein before for augmenting and/or enhancing the flavour of a product selected from foodstuffs and beverages, preferably a non-tomato based product. The present invention will now be further illustrated in the following examples, which are in no way intended to limit the scope of the invention as described herein before and/or as defined in the appended claims.

### Examples

### Example 1: preparation of taste enhancing fractionated tomato extracts

Tomatoes are washed and pressed through square holes resulting in an aqueous liquid comprising soluble tomato solids and pulp, a (wet) solid mass containing mainly insoluble tomato components called the fibres as well as seeds and skin. Sieves are used to remove seeds and skin and further separation of the fibres is achieved by using a decanter or a centrifugal separator, such as a Westfalia CA-365-010 at a revolution speed of 4000 rpm and/or an Alpha Laval Centrifuge.
The liquid yielded in the previous step is a refined tomato serum that was centrifuged again at higher rpm in order to remove smaller suspended particles. This polished serum is fed to a microfiltration (MF) unit with a DSS MF membrane of 1 microns pore size (FSM1.OPP).

The permeate of the MF step, which is of reduced pectin content and free from any undissolved material/particles with a diameter of more than 1 micron, becomes the feeding stream for a nanofiltration step (NF). The MF permeate is fed to a NF rig where the separation is accomplished using a Nitto-Denko NF membrane, the NTR7450, that shows ca 50% NaCl rejection according to the manufacturer. The NF permeate, also referred to as the fractionated tomato extract, was collected. Visual and sensorial analysis revealed that the liquid was transparent, had a very light orange/yellowish colour, indicating a lycopene level of below 10 ppm and a beta-carotene level below 5 ppm. The liquid had a very weak aroma and a very strong salty-savoury taste.

By comparison tests preformed using a panel of professional flavourists, the fractionated extract was found to significantly enhance the flavour of a white soup and a white sauce. In addition it was found that the fractionated extract did not impart undesired redness or any appreciable tomato aroma at any of the flavour enhancing levels tested.

The table below shows two fractionated tomato extracts according to the invention.

| | Fractionated tomato extract A | Fractionated tomato extract B |
|---|---|---|
| pH* | 4.6 | 4.9 |
| Glutamic acid (%wt dry weight) | 4.9 | 3.8 |
| Ratio (w/w)glutamic acid to citric acid | 5 | 3 |
| weight ratio of sugars to glutamic acid | 10 | 5 |
| GABA (%wt dry weight) | 5 | 7.6 |
| Potassium (%wt dry weight) | 12.5 | 18.8 |

| | | |
|---|---|---|
| * pH measured at 1 Degrees Brix | | |

## Claims

1. Fractionated tomato extract having a pH of at least 4.6, when having a Brix value of 1.0; comprising 2.5-95 wt% of glutamic acid, based on the dry weight thereof; having a weight ratio of total glutamic acid to citric acid of at least 0.8 and a lycopene level of below 50 ppm, based on the dry weight of the extract.

2. Fractionated tomato extract according to claim 1, the weight ratio of sugars to glutamic acid is less than 20.

3. Fractionated tomato extract according to claim 1 or 2, wherein the level of wherein the level of 3-methylbutanal is below 27 ppb and/or wherein the level of 6-methyl-5-hepten-2-one is below 800 ppb and/or wherein the level of β-damascenone is below 5 ppb, when having a Brix value of 4.

4. Fractionated tomato extract according to any one of the preceding claims, wherein gamma-aminobutyric acid (GABA) is present in amounts of at least 2 wt%, more preferably, at least 3 wt%, most preferably at least 4 wt%, and preferably at most 50 wt%, based on the dry weight of the fractionated tomato extract.

5. Fractionated tomato extract according to any one of the preceding claims, wherein the glutamic acid to citric acid weight ratio is at least 1.0.

6. Fractionated tomato extract according to any one of the preceding claims, wherein the level of potassium is higher than 6 wt% based on dry weight, more preferably higher than 7.5 wt%, most preferably higher than 10% wt%, preferably said level does not exceed 40 wt%, more preferably it does not exceed 25% wt%, most preferably it does not exceed 20% wt% by dry weight of the fractionated tomato extract..

7. Flavour enhancing composition comprising 1-100 wt% of a fractionated tomato extract according to any one of claims 1-6.

8. Use of a fractionated tomato extract as defined in any one of claims 1-6 for enhancing the flavour of a product selected from the group of foodstuffs and beverages.

9. Use according to claim 8, wherein said product is selected from non-tomato based foodstuffs and non-tomato based beverages.

10. Method of producing a fractionated tomato extract as defined in any one of claims 1-6, comprising the subsequent steps of preparing tomato serum and hydrolysing the proteins contained in the tomatoes from which the serum is prepared; subsequently fractionating the serum into two or more fractions, one fraction being rich in glutamic acid and low in citric acid and lycopene.

11. Method according to claim 10, wherein the step of fractionating the serum into two or more fractions, one fraction being rich in glutamic acid and low in citric acid and lycopene is performed by nano-filtration.

12. Method according to claim 11, comprising the additional step of blending the nanofiltration permeate with a flavour carrier material.

13. Method of preparing a product selected from foodstuffs and beverages having enhanced flavour impact, said method comprising admixing with said product a fractionated tomato extract as defined in any one of claims 1-6 and/or as obtainable by the method defined in any one of claims 10-12.

14. Product obtainable by the method as defined in claim 13.

## Patentansprüche

1. Fraktionierter Tomatenextrakt, der einen pH von wenigstens 4,6 hat, wenn er einen Brix-Wert von 1,0 hat; der 2,5-95 Gewichtes-% Glutaminsäure, bezogen auf das Trockengewicht davon, hat; der ein Gewichtsverhältnis von gesamter Glutaminsäure zu Citronensäure von wenigstens 0,8 und eine Lycopen-Konzentration von unter 50 ppm, bezogen auf das Trockengewicht des Extrakts, hat.

2. Fraktionierter Tomatenextrakt gemäß Anspruch 1, in dem das Gewichtsverhältnis von Zuckern zu Glutaminsäure kleiner als 20 ist.

3. Fraktionierter Tomatenextrakt gemäß Anspruch 1 oder 2, wobei die Konzentration von 3-Methylbutanal unter 27 ppb liegt und/oder wobei die Konzentration an 6-Methyl-5-hepten-2-on unter 800 ppb ist und/oder wobei die Konzentration an β-Damascenon unter 5 ppm liegt, wenn er einen Brix-Wert von 4 hat.

4. Fraktionierter Tomatenextrakt gemäß einem der vorangehenden Ansprüche, in dem gamma-Aminobuttersäure (GABA) in Mengen von wenigstens 2 Gewichts-%, bevorzugter wenigstens 3 Gewichts-%, am bevorzugtesten wenigstens 4 Gewichtes-% und vorzugsweise höchstens 50 Gewichts-%, bezogen auf das Trockengewicht des fraktionierten Tomatenextrakts, vorliegt.

5. Fraktionierter Tomatenextrakt gemäß einem der vorangehenden Ansprüche, in dem das Gewichtsverhältnis von Glutaminsäure zu Citronensäure wenigstens 1,0 ist,

6. Fraktionierter Tomatenextrakt gemäß einem der vorangehenden Ansprüche, in dem die Konzentration an Kalium höher als 6 Gewichtes-%, bezogen auf das Trockengewicht, bevorzugter höher als 7,5 Gewichts-%, am bevorzugtesten höher als 10 Gewichts-% ist, wobei die Konzentration vorzugsweise 40 Gewicht-% nicht übersteigt, bevorzugter 25 Gewichts-% nicht übersteigt, am bevorzugtesten 20 Gewichts-% nicht übersteigt, bezogen auf das Trockengewicht des fraktionierten Tomatenextrakts.

7. Aromaverstärker, umfassend 1-100 Gewichts-% eines fraktionierten Tomatenextrakts gemäß einem der Ansprüche 1-6.

8. Verwendung eines fraktionierten Tomatenextrakts, wie er in einem der Ansprüche 1-6 definiert ist, zur Verstärkung des Aromas eines Produkts, das aus der Gruppe von Nahrungsmitteln und Getränken ausgewählt ist.

9. Verwendung gemäß Anspruch 8, wobei das Produkt aus Nahrungsmitteln auf Nicht-Tomaten-Basis und Getränken auf Nicht-Tomaten-Basis ausgewählt ist.

10. Verfahren zur Herstellung eines fraktionierten Tomatenextrakts, wie in einem der Ansprüche 1-6 definiert, umfassend die aufeinander folgenden Schritte des Herstellens von Tomatenserum und Hydrolysieren der in den Tomaten, aus welchen das Serum hergestellt ist, enthaltenen Proteine; anschließend Fraktionieren des Serums in zwei oder mehr Fraktionen, wobei eine Fraktion reich an Glutaminsäure ist und einen geringen Gehalt an Citronensäure und Lycopen hat.

11. Verfahren gemäß Anspruch 10, wobei der Schritt des Fraktionierens des Serums in zwei oder mehr Fraktionen, wobei eine Fraktion reich an Glutaminsäure ist und einen geringen Gehalt an Citronensäure und Lycopen hat, durch Nanofiltration durchgeführt wird.

12. Verfahren gemäß Anspruch 11, das den zusätzlichen Schritt des Mischens des Nanofiltrations-Permeats mit einem Aromaträgermaterial umfasst.

13. Verfahren zur Herstellung eines Produkts, das aus Nahrungsmitteln und Getränken ausgewählt ist, das ein verstärktes Aroma hat, wobei das Verfahren Zumischen eines fraktionierten Tomatenextrakts, wie in einem der Ansprüche 1-6 definiert und/oder wie durch das in einem der Ansprüche 10-12 definierten Verfahrens erhältlich, zu dem Produkt umfasst.

14. Produkt, erhältlich durch das Verfahren, wie es in Anspruch 13 definiert ist.

## Revendications

1. Extrait de tomate fractionné ayant un pH d'au moins 4,6, lorsqu'il a une valeur de Brix de 1,0 ; comprenant 2,5 à 95 % en poids d'acide glutamique, par rapport à son poids à sec ; ayant un rapport en poids entre l'acide glutamique total et l'acide citrique d'au moins 0,8 et un taux de lycopène inférieur à 50 ppm, par rapport au poids à sec de l'extrait.

2. Extrait de tomate fractionné selon la revendication 1, dans lequel le rapport en poids entre les sucres et l'acide glutamique est inférieur à 20.

3. Extrait de tomate fractionné selon la revendication 1 ou 2, dans lequel le taux de 3-méthylbutanal est inférieur à 27 ppb et/ou dans lequel le taux de 6-méthyl-5-heptén-2-one est inférieur à 800 ppb et/ou dans lequel le taux de β-damascénone est intérieur à 5 ppb, lorsqu'il a une valeur de Brix de 4.

4. Extrait de tomate fractionné selon l'une quelconque des revendications précédentes, dans lequel l'acide gamma-aminobutyrique (GABA) est présent à des quantités d'au moins 2 % en poids, de manière davantage préférée d'au moins 3 % en poids, de manière préférée entre toutes d'au moins 4 % en poids, et de préférence d'au plus 50 % en poids, par rapport au poids à sec de l'extrait de tomate fractionné.

5. Extrait de tomate fractionné selon l'une quelconque des revendications précédentes, dans lequel le rapport en poids entre l'acide glutamique et l'acide citrique est d'au moins 1,0.

6. Extrait de tomate fractionné selon l'une quelconque des revendications précédentes, dans lequel le taux de potassium est supérieur à 6 % en poids par rapport au poids à sec, de préférence supérieur à 7,5 % en poids, de manière préférée entre toutes supérieur à 10 % en poids, de préférence ledit taux n'excède pas 40 % en poids, de manière davantage préférée il n'excède pas 25 % en poids, de manière préférée entre toutes, il n'excède pas 20 % en poids par rapport au poids à sec de l'extrait de tomate fractionné.

7. Composition rehaussant le goût, comprenait 1 à 100 % en poids d'un extrait de tomate fractionné selon l'une quelconque des revendications 1 à 6.

8. Utilisation d'un extrait de tomate fractionné tel que défini dans l'une quelconque des revendications 1 à 6 pour rehausser le goût d'un produit choisi dans le groupe des aliments et boissons.

9. Utilisation selon la revendication 8, dans laquelle ledit produit est choisi parmi les aliments sans tomate et les boissons sans tomate.

10. Méthode de production d'un extrait de tomate fractionné tel que défini dans l'une quelconque des revendications 1 à 6, comprenant les étapes ultérieures consistant à préparer un sérum de tomate et à hydrolyser les protéines contenues dans les Lomates à partir desquelles le sérum est préparé ; ensuite à fractionner le sérum en deux fractions ou plus, une fraction étant riche en acide glutamique et pauvre en acide citrique et en lycopène.

11. Méthode selon la revendication 10, dans laquelle l'étape consistant à fractionner le sérum en deux fractions ou plus, une fraction étant riche en acide glutamique et pauvre en acide citrique et en lycopène, est réalisée par nanofiltration.

12. Méthode selon la revendication 11, comprenant l'étape supplémentaire consistant à mélanger le perméat de la nanofiltration avec une matière porteuse d'arôme.

13. Méthode de préparation d'un produit choisi parmi des alimentes et des boissons ayant un impact d'arôme rehaussé, ladite méthode comprenant le mélange avec ledit produit d'un extrait de tomate fractionné tel que défini dans l'une quelconque des revendications 1 à 6 et/ou tel qu'il peut être obtenu par la méthode définie dans l'une quelconque des revendications 10 à 12.

14. Produit pouvant être obtenu par la méthode telle que définie dans la revendication 13.
